# EUROPEAN PATENT SPECIFICATION

(11) **EP 2 472 633 B1**
(45) Date of publication and mention of the grant of the patent: **15.06.2016**
(21) Application number: 12150051.6
(22) Date of filing: 03.01.2012
(51) Int. Cl.: H01M 2/02, H01M 2/14, H01M 2/10, H01M 10/625, H01M 10/6563, H01M 10/647, H01M 10/6551, H01M 10/6555, H01M 10/613, H01M 2/34

(54) **Battery module**
Batteriemodul
Module de batterie

(30) Priority: 04.01.2011 US 201161429707 P; 12.10.2011 US 201113272134
(43) Date of publication of application: 04.07.2012
(73) Proprietor: Samsung SDI Co., Ltd., Gyeonggi-do (KR); Robert Bosch GmbH, 70442 Stuttgart (DE)
(72) Inventor: KIM, Myung-Chul, Yongin-si (KR)
(74) Representative: Gulde & Partner

(56) References cited:
- EP-A1- 1 701 404
- JP-A- 2004 235 110
- US-A1- 2007 026 303
- US-A1- 2007 133 151
- US-A1- 2008 292 950

## Description

### BACKGROUND

### 1. Field of the Invention

The embodiment relates to a battery module, and more particularly, to a module including a plurality of battery cells and a barrier disposed between the battery cells.

### 2. Discussion of Related Art

Recently, a high-output battery module using a high energy density nonaqueous electrolyte is being developed, and the high-output battery module is realized by a high-capacity battery module formed by connecting a plurality of battery cells in series so that the battery module is used for devices using high power, for example, a driving motor of an electric car.

A battery cell includes an electrode assembly formed of a positive plate and a negative plate, and an electrolyte and generates energy through an electrochemical reaction between the plates and the electrolyte. Here, gas may be generated in the battery cell due to a side reaction of the electrochemical reaction.

The gas may deform an external appearance of the battery cell to affect a shape of the battery module constituted by a plurality of arranged battery cells, interrupting securely fixing the battery cell.
US 2008/292950 A1 discloses a spacer for heat insulation and heat release which has a cavity filled with a fire-extinguishing capability. In case a fire forms an opening in the spacer, the fire-extinguishing substance can flow out and extinguish the fire.
JP 2004 235110 A discloses a battery module having a plurality of single cells being separated by partition members, wherein the partition members have larger height and width than the single cells in order to prevent the single cells from being deformed or damaged when other objects impact on the housing.
US 2007/0026303 A1 discloses a battery module including unit cells and a cell barrier interposed between the unit cells. The cell barrier includes a plate and protrusions formed on one or both sides of the plate.
US 2007/0133151 A1 discloses a battery module including a plurality of alternating unit batteries and partitioning walls having at least one fixing member coupled to each unit battery.

### SUMMARY OF THE INVENTION

An aspect of the present invention is to provide a battery module which becomes light by using a novel barrier.

Another aspect of the present invention is to provide a battery module having a barrier being adapted to effectively control swelling of a battery cell.

According to an aspect of the present invention, there is provided a battery module comprising: a plurality of battery cells, at least one barrier comprising a plate and being arranged between the adjacent battery cells of the plurality of battery cells; wherein the at least one barrier comprises a protrusion extending from the plate, wherein at least a part of the protrusion comprises an elastic member and wherein the protrusion of the at least one barrier directly contacts each of the adjacent battery cells, wherein the plate includes at least one opening, wherein the protrusion of the at least one barrier comprises a first head protruding from a first side of the plate, a second head protruding from a second side of the plate, and a connecting member being connected to the first head and the second head and passing through the opening.

In the sense of the present invention, the protrusion is (at least) partly protruding from the plate. In case the protrusion is formed in a hole which is formed in the plate, the protrusion only partly protrudes from the plate. That is, the portion being located within the hole, does not protrude from the plate while the portion being located outside of the hole, does protrude from the plate. In other words, the protrusions of the present invention are spacers formed each of the adjacent battery cells such to space the adjacent battery cells apart from each other.

Preferably the elastic member comprises an elastomer. Preferably the elastic member consist of an elastomer. Preferably a barrier is formed between each pair of adjacent battery cells of the plurality of battery cells. Preferably the plate of the barrier comprises a plurality of openings being formed in a regular pattern. Preferably the plate of the barrier comprises a plurality of openings being formed in a pattern of equidistant holes being formed along rows and columns.

Preferably at least one of the first head, the second head and the connecting member is formed of an elastomer. Preferably the connecting member comprises a spring. Preferably the material of the first head is different to the material of the second head. Preferably an end portion of the connecting member and a portion of one selected from the first head and the second head which faces toward the end portion of the connecting member comprise a coupling part.

Preferably the elastomer of the protrusion has a hardness of 30 Hs to 200 Hs according to the Korean Standard KS B 0807 ("METHOD OF SHORE HARDNESS TEST"). More preferably the elastomer of the protrusion has a hardness of 30 Hs to 100 Hs. More preferably the elastomer of the protrusion has a hardness of 40 Hs to 90 Hs. Still more preferably the elastomer of the protrusion has a hardness of 50 Hs to 80 Hs.

Preferably the elastomer of the protrusion comprises at least one material selected from the group consisting of rubber, silicon, and polystyrene. Preferably the at least one barrier has a size corresponding to the size of the plurality of battery cells. That is, a ratio of the size of the at least one barrier and the size of a battery cell preferably ranges between 0.85 and 1.15, more preferably between 0.95 and 1.05. Preferably all batteries of the plurality of battery cells have the same size. More preferably the at least one barrier has a size equal to the size of the plurality of battery cells.

Preferably a cross-section of the connecting member has a shape corresponding to the shape of the opening of the plate. That is, a ratio of the surface area of the cross-section of the connecting member and the surface area of the cross-section of the opening of the plate preferably ranges between 0.85 and 1.00, more preferably between 0.95 and 1.00. Preferably the cross-sections of all openings have the same size. Preferably the cross-sections of all connecting member have the same size. More preferably cross-section of the connecting member has a shape equal to the shape of the opening of the plate.

Preferably the first head and/or the second head have a round shape or a polygonal tube shape. Preferably the first head and/or the second head comprise a tapering-shape cross section, wherein the sectional axis extends along the longitudinal axis of the connecting member.

According to another aspect of the present invention, there is provided a vehicle comprising a battery module according to at least one of the above disclosed features.

According to another aspect of the present invention, there is provided a battery module including a plurality of battery cells arranged in one direction, a barrier disposed between the plurality of battery cells; and a housing accommodating the battery cells and the barrier, wherein the barrier includes a plate including at least one opening and a protrusion formed to pass through the opening, and at least part of the protrusion is formed of an elastomer.

The opening may include a plurality of holes formed in the plate at regular intervals.

The plate may include a first side and a second side, and the protrusion may include a first head or a second head formed in the first side or the second side. Here, the protrusion may further include a connecting member connecting the first head to the second head and being formed to pass through the opening of the plate.

Further, the first head or the second head may have a round or polygonal tube shape.

Here, the first heads or the second heads may be formed at regular intervals.

One of the first head, the second head, and the connecting member may be formed of an elastomer.

Further, the first head and the connecting member may be formed of an elastomer and be integrated.

A plurality of rows of the first heads or a plurality of rows of the second heads may be arranged in lines on the first side or the second side of the plate, but the rows of the first heads and the rows of the second heads may be alternately arranged on the same side.

The first head and the second head may be connected by the connecting member and be integrated.

The connecting member may be formed to have a corresponding size to the opening of the plate.

The connecting member may include a spring.

The elastomer may include one of rubber, silicon, and polystyrene.

The elastomer may have a hardness of 30 Hs to 200 Hs.

The housing may include a pair of first and second end plates disposed outside the battery cells, and a side plate and a bottom plate connecting the first and second end plates.

As described above, according to exemplary embodiments of the present invention, a battery module uses a novel barrier, so that the battery module effectively cools battery cells and becomes light.

Further, according to exemplary embodiments of the present invention, the battery module effectively prevents swelling of battery cells to improve reliability of the battery cells and to enhance production efficiency.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a battery module according to an exemplary embodiment of the present invention;
FIG. 2 is an exploded perspective view of the battery module of FIG. 1;
FIG. 3A is a perspective view of a barrier according to an exemplary embodiment of the present invention;
FIG. 3B is an exploded perspective view of the barrier of FIG. 3A;
FIG. 3C is a cross-sectional view taken along a line A-A of FIG. 3A;
FIG. 3D is an exploded cross-sectional of FIG. 3C;
FIG. 4A is a perspective of a barrier according to another exemplary example of the present invention;
FIG. 4B is a cross-sectional view taken along a line A'-A' of FIG. 4A;
FIG. 5A is a perspective view of one side of a barrier according to still another exemplary embodiment of the present invention;
FIG. 5B is a perspective view of another side of the barrier of FIG. 5A;
FIG. 5C is a cross-sectional view taken along a line B-B of FIG. 5A;
FIG. 5D is an exploded cross-sectional view of FIG. 5C;
FIG. 6A is a perspective of a barrier according to yet another exemplary example of the present invention;
FIG. 6B is a cross-sectional view taken along a line B'-B' of FIG. 6A;
FIG. 7A is a perspective of a barrier according to still another exemplary example of the present invention;
FIG. 7B is a cross-sectional view taken along a line C-C of FIG. 7A;
FIG. 8A is a perspective of a barrier according to yet another exemplary example of the present invention;
FIG. 8B is a cross-sectional view taken along a line D-D of FIG. 8A;
FIG. 8C is an exploded cross-sectional view of FIG. 8B.
FIG. 9A is a perspective of a barrier according to still another exemplary example of the present invention;
FIG. 9B is a cross-sectional view taken along a line E-E of FIG. 9A; and
FIG. 9C is an exploded cross-sectional view of FIG. 9B.

### DETAILED DESCRIPTION OF THE INVENTION

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, when an element is referred to as being "on" another element, it can be directly on the other element or be indirectly on the other element with one or more intervening elements interposed therebetween. Also, when an element is referred to as being "connected to" another element, it can be directly connected to the other element or be indirectly connected to the other element with one or more intervening elements interposed therebetween. Hereinafter, like reference numerals refer to like elements.

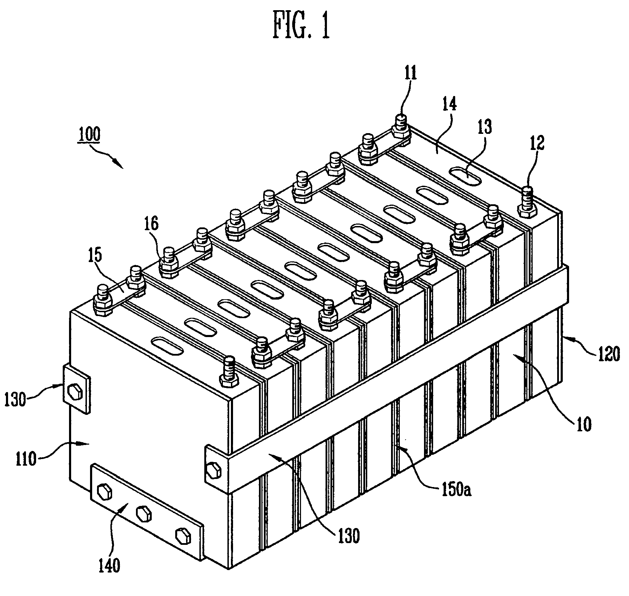

Referring to FIGS. 1 to 3D, an exemplary embodiment of the present invention is described.

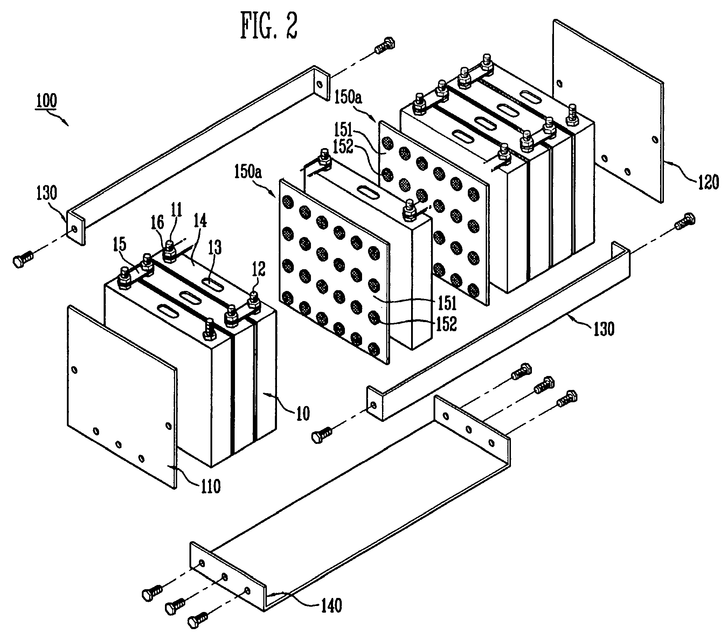

FIG 1 is a perspective view of a battery module according to the exemplary embodiment of the present invention, and FIG. 2 is an exploded perspective view of FIG 1.

Referring to FIGS. 1 and 2, the battery module 100 according to the present embodiment includes a plurality of battery cells 10 arranged in one direction; a barrier 150a disposed between the plurality of battery cells 10; and a housing 110, 120, 130, and 140 accommodating the battery cells 10 and the barrier 150a. The barrier 150a includes a plate 151 having at least one opening, and a protrusion 152 formed to pass through the opening, wherein at least part of the protrusion 152 includes an elastomer.

The battery cells 10 may be formed by accommodating an electrode assembly and an electrolyte in a battery case and sealing the battery case with a cap assembly 14. The cap assembly 14 may include a positive terminal 11 and a negative terminal 12 which are formed on opposite end portions of the cap assembly 14 and a vent 13 formed between the terminals 11 and 12. The electrode assembly may include a positive plate, a negative plate, and a separator disposed between the plates. The positive plate is connected to the positive terminal 11, and the negative plate is connected to the negative terminal 12, so that energy generated by an electrochemical reaction of the electrode assembly and the electrolyte is transmitted to the outside. Further, the vent 13 functions as a path through which gas generated in the battery cell 10 is discharged to the outside.

The housing 110, 120, 130, and 140 fixes the plurality of battery cells 10 and the barrier 150a to form the battery module 100. The housing 110, 120, 130, and 140 may be formed of a pair of first and second end plates 110 and 120 disposed outside the battery cells 10, and a side plate 130 and a bottom plate 140 which connect the end plates.

The first and second end plates 110 and 120, a pair of side plates 130, and the bottom plate 140 form a space to accommodate the battery cells 10, and the battery cells 10 are arranged in one direction in the formed space. Here, the battery cells 10 are arranged side by side with wider front sides facing each other. The positive terminal 11 or the negative terminal 12 of two neighboring battery cells 10 may be electrically connected through a bus bar 25. The bus bar 15 includes a hole through which the positive terminal 11 and the negative terminal 12 pass, and the bus bar 15 with the positive terminal 11 and the negative terminal 12 passing through the hole to be connected may be fixed by a nut 16 or the like.

The pair of side plates 130 supports opposite lateral sides of the battery cells 10, and the bottom plate 140 supports a bottom side of the battery cells 10. One end portions of the side plates 130 and the bottom plate are respectively coupled with the first end plate 110, and another end portions thereof are coupled with the second end plate 120, so that the first and second end plates 110 and 120 are connected to each other. Here, coupling is made through a bolt and a nut, but is not limited thereto.

The first and second end plates 110 and 120 are disposed to be in surface contact with battery cells 10 disposed at opposite ends to press the plurality of battery cells 10 inwards. Here, the battery cells 10 supported by the first and second end plates 110 and 120 are arranged with the positive terminals 11 and the negative terminals 12 being alternately disposed, so that neighboring terminals are connected in series.

The housing 110, 120, 130, and 140 formed of the first and second end plates 110 and 120, the pair of side plates 130, and the bottom plate 140 is provided to stably fix the battery cells 10 and may be modified variously, not limited to a configuration in the present embodiment. Further, a connected structure and a number of battery cells 10 may be changed based on a design of the battery module 100.

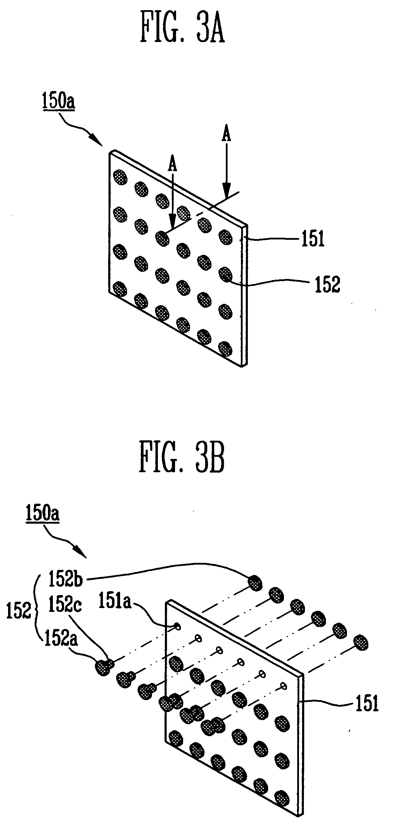

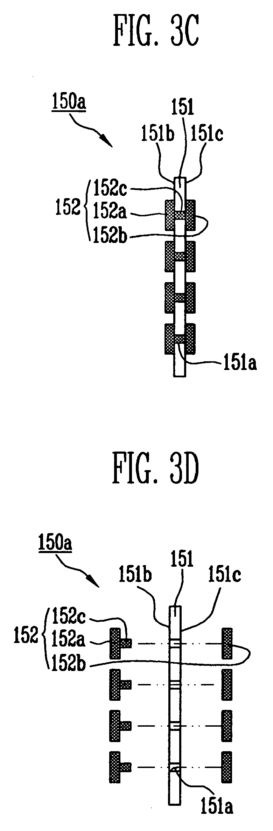

FIG. 3A is a perspective view of the barrier according to the present invention, FIG. 3B is an exploded perspective view of the barrier of FIG. 3A, FIG. 3C is a cross-sectional view taken along a line A-A of FIG. 3A, and FIG. 3D is an exploded cross-sectional view of FIG. 3C.

Referring to FIGS. 3A to 3D, the barrier 150a disposed between the plurality of battery cells 10 may include the plate 151 having at least one opening 151a, and the protrusion 152 formed to pass through the opening 151a. Here, at least part of the protrusion 152 includes an elastomer.

The barrier 150a is disposed between two neighboring battery cells 10 to space the battery cells 10 from each other. Thus, a space may be formed between the battery cells 10 due to the barrier 150a. The space may function as a path to discharge heat through so that heat generated in the battery cells 10 due to a plurality of times of charging and discharging is not accumulated. Further, the space may be a path of a heat transmission medium for cooling or heating of the battery cells 10.

The openings 151a may be formed at regular intervals, and a plurality of openings 151a may be formed. The plate 151 may include a first side 151b and a second side 151c. The protrusion 152 may include a first head 152a or a second head 152b formed on the first side 151b or the second side 151c. Further, the protrusion 152 may further include a connecting member 152c connecting the first head 152a and the second head 152b and formed to pass through the opening 151a.

The first head 152a or the second head 152b may have a round or polygonal tube shape, and the first heads 152a or the second heads 152 may be formed on the plate 151 at regular intervals.

Generally, the battery cells 10 use a structure of pressing the battery cells 10 at a predetermined pressure or more in order to control swelling of the battery cells 10 occurring in charging and discharging processes. Further, neighboring battery cells 10 are spaced so that the battery cells 10 are heated or heat is discharged from the battery cells 10. Thus, the barrier 150a having an approximately corresponding size to the battery cells 10 is disposed between the battery cells 10. Here, the barrier 150a may include the protrusion 152 and the plate 151 to support the protrusion 152. Further, the barrier 150a may be disposed so that the protrusion 152 is in direct contact with the battery cells 10.

When the battery module 100 is formed, an insulating process is applied to at least one of the battery cells 10 and the protrusion 152 to prevent a short circuit from occurring therebetween. Generally, the insulating process is achieved by performing tubing on a surface of the battery cells 10 using a nonconductive material of an insulating film. However, the tubing formed on the external surface of the battery cells 10 may be broken by external impact or may be damaged by friction between the protrusion 152 and the battery cell 10 due to vibrations in the battery module 100. When the tubing is damaged, the battery cells 10 may electrically short-circuit with the outside, and an external appearance of the battery cells 10 may become deformed.

The barrier 150a includes the protrusion 152, a part being in direct contact with the battery cells 10, at least part of which may be formed an elastomer. Generally, the elastomer is a material which may be restored from deformation by external force and has excellent anti-attrition, elongation, and impact strength.

At least one of the first head 152a, the second head 152, and the connecting member 152c which constitute the protrusion 152 may be formed of an elastomer. Further, the first head 152a and the connecting member 152c may be formed of an elastomer, and may be integrated or be formed separately.

When the first head 152a and the connecting member 152c are integrated, the connecting member 152c passes through the opening 151a so that the first head 152a is disposed on the first side 151b of the plate 151, and then the second head 152b is coupled with the passing through connecting member 152c on the second side 151c of the plate 151, thus manufacturing the barrier 150a according to the present embodiment.

Here, the connecting member 152c may have a corresponding shape to the opening 151a of the plate 151. The connecting member 152c is provided to connect and fix the first head 152a and the second head 152b disposed on the first side 151b and the second side 151c of the barrier 150a, passing through the opening 151a of the plate 151. Thus, the connecting member 152c may have a size enough to pass through the opening 151a, but may preferably have a corresponding size to the opening 151a in order to stably fix the first head 152a and the second head 152b and to improve anti-vibration in the battery module 100.

Further, an end portion of the connecting member 152c which is not connected to the first head 152a and a portion of the second head 152b corresponding to the end portion of the connecting member 152c may each further include a coupling part. The coupling parts are provided to couple and fix the connecting member 152c and the second head 152b, and the coupling part provided on the end portion of the connecting member 152c may be correspondingly coupled with the coupling part provided on the second head 152b. For example, the coupling parts may include a groove-protrusion combination, a hook combination, a screw combination, or the like.

The elastomer forming the at least part of the protrusion 152 may have a hardness of 30 Hs to 100 Hs and may include, for example, at least one of rubber, silicon, and polystyrene. When the hardness of the elastomer is less than 30 Hs, the elastomer has inferior durability, so that the elastomer part of the protrusion 152 may be easily worn out or damaged. When the hardness of the elastomer is more than 100 Hs, the protrusion 152 has an inflexible structure, so that anti-vibration is not sufficiently effective. Thus, the tubing of the battery cells 10 is damaged by external force or vibrations to cause a short circuit.

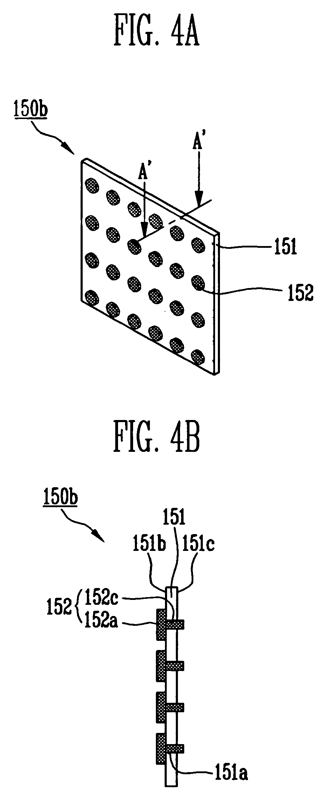

Hereinafter, another exemplary embodiment of the present invention is described with reference to FIGS. 4A to 9C. Except for the following description, descriptions with reference to FIGS. 4A to 9C are similar to those described above with reference to FIGS. 1 to 3D, and thus are not repeated.

FIG. 4A is a perspective view of a barrier according to the other embodiment of the present invention, and FIG. 4B is a cross-sectional view taken along a line A'-A' of FIG. 4A.

Referring to FIGS. 4A and 4B, a barrier 150b may include a plate 151 having at least one opening 151a and a protrusion 152 formed to pass through the opening 151a. Here, at least part of the protrusion 152 is formed of an elastomer. The protrusion 152 may include a first head 252a formed on a first side 151b or a second side 151c of the plate 151. Further, the protrusion 152 may further include a connecting member 152c passing through the opening 151a and being integrated with the first head 152a.

In the present embodiment, only the first head 152a is formed on the first side 151b of the plate 151, but a second head is omitted. One end portion of the connecting member 152c of the protrusion 152 is exposed on the second side 151c. Thus, battery cells facing the second side 151c are spaced by the exposed end portion of the connecting member 152c, so that a space between the battery cells is formed. The connecting member 152c may be integrated with the first head 152a, and a process of forming the second head may be omitted, and thus the protrusion 152 may be formed via a single process, improving processing efficiency. Here, the connecting member 152c may be fixed by friction between the connecting member 152c and the opening 151 a of the plate 151 without the second head.

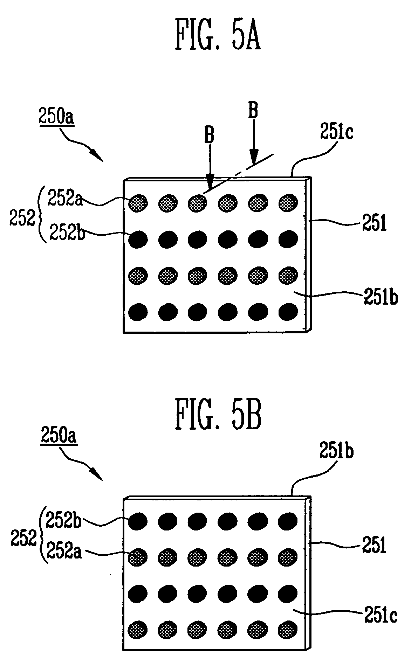

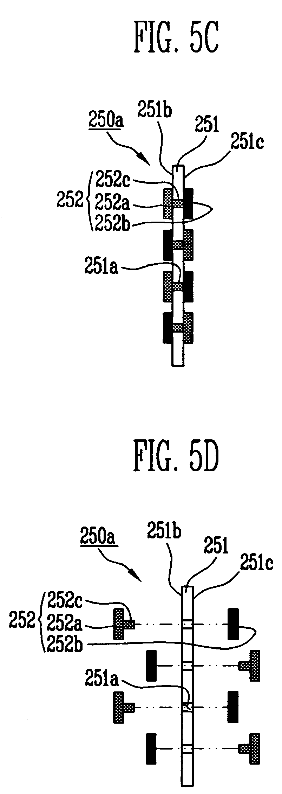

FIG. 5A is a perspective view of one side of a barrier according to still another exemplary embodiment of the present invention, FIG. 5B is a perspective view of another side of the barrier of FIG. 5A, FIG. 5C is a cross-sectional view taken along a line B-B of FIG. 5C, and FIG. 5D is an exploded cross-sectional view of FIG. 5C.

Referring to FIGS. 5A to 5D, a barrier 250a may include a plate 251 having at least one opening 251a and a protrusion 252 formed to pass through the opening 251a. Here, at least part of the protrusion 252 is formed of an elastomer.

The plate 251 includes a first side 251b and a second side 251c, and the protrusion 252 may include a first head 252a or a second head 252b formed on the first side 251b or the second side 251c. Further, the protrusion 252 may further include a connecting member 252c connecting the first head 252a and the second head 252b and integrated with the first head 252a. A plurality of rows of the first heads 252a or a plurality of rows of the second heads 252b may be arranged in lines on the first side 251b or the second side 251c of the plate 251, but the rows of the first heads 252a and the rows of the second heads 252b may be alternately arranged on the same side.

In the present embodiment, the first head 252a and the second head 252b may be formed of different materials. For example, the first head 252a and the second head 252b may be formed of elastomers, which are different types, or at least one of the first head 252a and the second head 252b may be formed an elastomer. The connecting member 252c may also be formed of a different material from the first head 252a or the second head 252b. However, in the present embodiment, the connecting member 252c is integrated with the first head 252a to include the same material as the first head 252a.

The first head 252a integrated with the connecting member 252c may be formed on the first side 251b or the second side 251c of the plate 251 to pass through the opening 251a. The connecting member 252c passing through the opening 251a may be coupled with the second head 252b on the second side 251c or the first side 251b. The first heads 252a may be formed on both the first side 251b and the second side 251c, and a row of the first heads 252a arranged in a line and a row of the second heads 252b arranged in a line may be alternately disposed on the first side 251b.

The coupling may be performed by a groove-protrusion combination, a hook combination, a screw combination, or the like. Here, materials or arrangements of the first heads 252a and the second heads 252b may be properly modified based on a design of the battery module, for example, a channel of a refrigerant, anti-vibration of the battery cells, or the like.

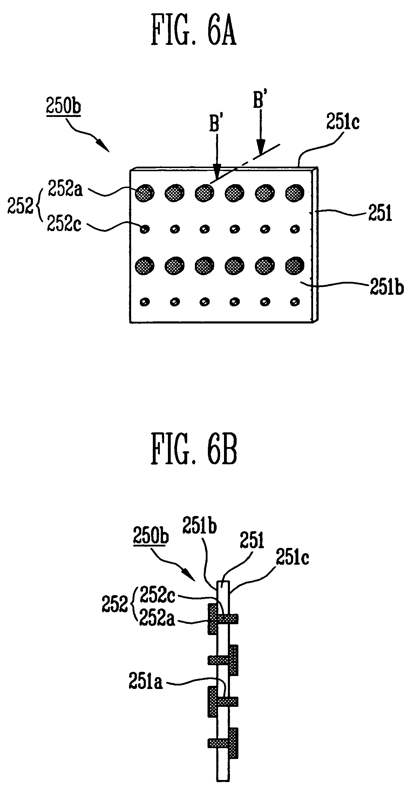

FIG. 6A is a perspective view of a barrier according to yet another exemplary embodiment of the present invention, and FIG. 6B is a cross-sectional view taken along a line B'-B' of FIG. 6A.

Referring to FIGS. 6A and 6B, a barrier 250b may include a plate 251 having at least one opening 251a and a protrusion 252 formed to pass through the opening 251a. Here, at least part of the protrusion 252 is formed of an elastomer.

The plate 251 may include a first side 251b and a second side 251c, and the protrusion 252 may include a first head 252a and a connecting member 252c. A plurality of rows of first heads 252a may be arranged in lines on the first side 251b or the second side 251c of the plate 251, but the first heads 252a may be omitted in even-number rows on one side and odd-number rows on the other side. That is, the protrusions 252 may be provided only in odd-number rows on the first side 251b and be provided only in even-number rows on the second side 251c, and thus end portions of the first heads 252a and end portions of the connecting member 252c are alternately arranged in different rows on the first side 251b or the second side 251c.

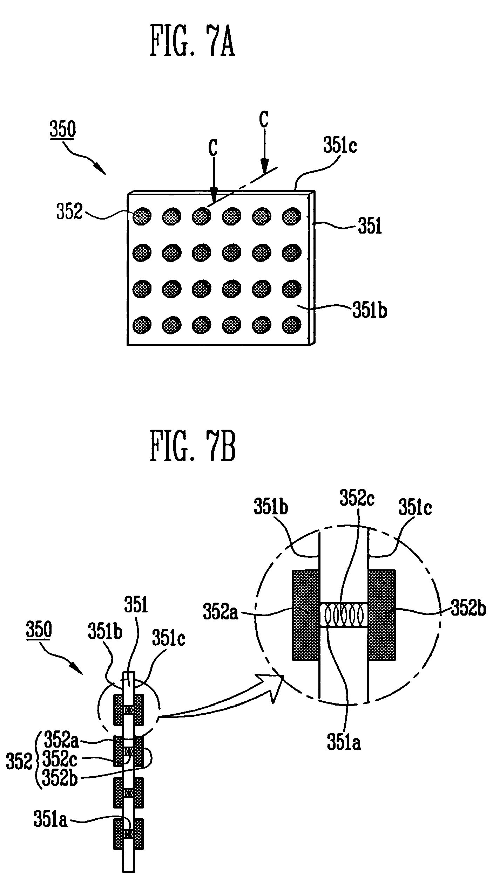

FIG. 7A is a perspective view of a barrier according to still another exemplary embodiment of the present invention, and FIG. 7B is a cross-sectional view taken along a line C-C of FIG. 7A.

Referring to FIGS. 7A and 7B, a barrier 350 may include a first side 351b, a second side 351c, and at least one opening 351a formed to extend from the first side 351b and the second side 351c. Here, the barrier 350 may include a protrusion 352 formed to pass through the opening 351a. Here, at least part of the protrusion 352 is formed of an elastomer.

The protrusion 352 may include a first head 352a and a second head 352b formed on the first side 351b and the second side 351c of the plate 351, and a connecting member 352c connecting the first head 352a to the second head 352b. Further, the connecting member 352c may include a spring.

The connecting member 352 is formed to pass through the opening 351a of the plate 351 and connects the first head 352a to the second head 352b to fix the first head 352a and the second head 352b on the plate 351. Here, the connecting member 352c includes a spring to be used regardless of a change in a thickness of the plate 351. That is, the connecting member 352c includes a spring having superior elasticity to be free from limitations in a size of the barrier 350, reducing a defect due to an assembly tolerance.

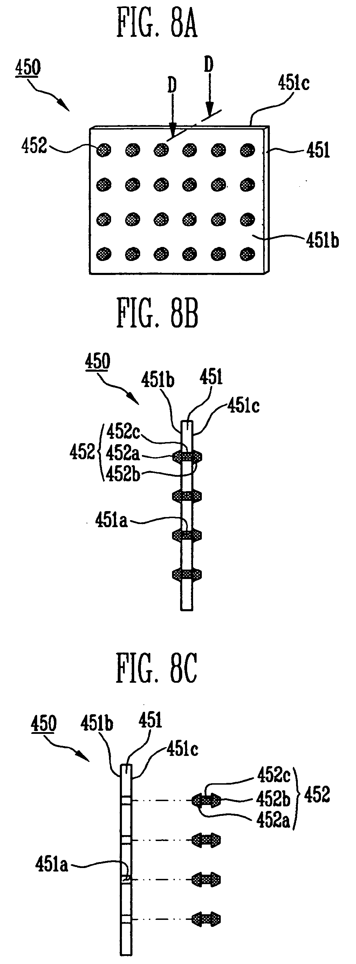

FIG. 8A is a perspective view of a barrier according to yet another exemplary embodiment of the present invention, FIG. 8B is a cross-sectional view taken along a line D-D of FIG. 8A, and FIG. 8C is an exploded cross-sectional view of FIG. 8B.

Referring to FIGS. 8A to 8C, a barrier 450 may include a first side 451b, a second side 451c, and at least one opening 451a formed to extend from the first side 451b and the second side 451c. Here, the barrier 450 may include a protrusion 452 formed to pass through the opening 451a. Here, at least part of the protrusion 452 is formed of an elastomer.

The protrusion 452 may include a pair of a first head 452a and a second head 452b, and a connecting member 452c connecting the first head 452a to the second head 452b. Here, the first head 452a, the second head 452b, and the connecting member 452c may be integrated.

In the present embodiment, the protrusion 452 may include an elastomer, and thus an external appearance thereof may not be fixed but be easily transformed by external force. Thus, the protrusion 452 in which the first head 452a, the second head 452b, and the connecting member 452c are integrated passes through the opening 451a on the first side 451b or the second side 431c of the plate 451.

Further, the first head 451b or the second side 451c has a tapering-shape cross section to easily pass through the opening 451a. That is, one end portion of the first head 452a or the second head 452b which is not connected to the connecting member 452c has a smaller diameter than or approximately the same diameter as the opening 451 to easily pass. Further, another end portion of the first head 452a or the second head 452b which is connected to the connecting member 452c has a larger diameter than the opening 451a to be fixed to the opening 451 a, not to be separated after passing through the opening 451a. That is, the other end portion of the first head 452a or the second head 452b which is formed to be larger than the opening 451a is stuck on an entrance of the opening 451a, so that the protrusion 452 may be stably fixed with the plate 451.

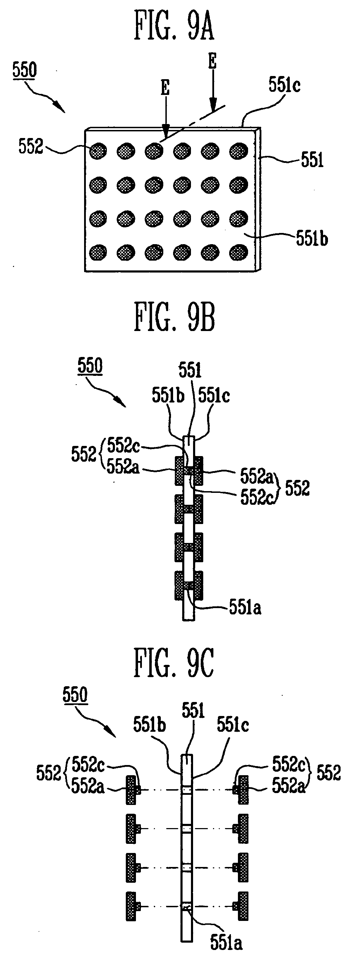

FIG. 9A is a perspective view of a barrier according to still another exemplary embodiment of the present invention, FIG. 9B is a cross-sectional view taken along a line E-E of FIG. 9A, and FIG. 9C is an exploded perspective view of FIG. 9B.

Referring to FIGS. 9A to 9C, a barrier 550 may include a plate 551 having at least one opening 551a and formed of a first side 551b and a second side 551c, and a protrusion 552 formed to pass through the opening 551a. Here, at least part of the protrusion 552 is formed of an elastomer.

In the present embodiment, the protrusion 552 may include a first head 552a and a connecting member 552c connected to the first head 552a. The connecting member 552c may be integrated with the first head 552a or be formed separately.

The connecting member 552c may be formed to have an approximate half or less of a length of the opening 551a. That is, protrusions 552 formed of the first head 552a and the connecting member 552c are provided both on the first side 551b and the second side 551c of the plate 551, and connecting members 552c provided to pass through the opening 551a on the first side 551b and the second side 551c face each other in the opening 551a. Thus, the same protrusions 522 may be used to decrease manufacturing costs of the battery module, reducing production costs.

While the present invention has been described in connection with certain exemplary embodiments, it is to be understood that the invention is not limited to the disclosed embodiments, but, on the contrary, is intended to cover various modifications and equivalent arrangements included within the scope of the appended claims, and-equivalents thereof.

## Claims

1. A battery module (100) comprising:
a plurality of battery cells (10),
at least one barrier (150a, 150b, 250a, 250b, 350, 450, 550) comprising a plate (151, 251, 351, 451, 551) arranged between adjacent battery cells (10) of the plurality of battery cells (10);
wherein the at least one barrier (150a, 150b, 250a, 250b, 350, 450, 550) further comprises a protrusion (152, 252, 352, 452, 552) extending from the plate (151, 251, 351, 451, 551),
wherein at least a part of the protrusion (152, 252, 352, 452, 552) comprises an elastic member and wherein the protrusion (152, 252, 352, 452, 552) of the at least one barrier (150a, 150b, 250a, 250b, 350, 450, 550) directly contacts each of the adjacent battery cells (10),
**characterized in that**
the plate (151, 251, 351, 451, 551) includes at least one opening (151a, 251a, 351a, 451a, 551a),
wherein the protrusion (152, 252, 352, 452, 552) of the at least one barrier (150a, 150b, 250a, 250b, 350, 450, 550) comprises a first head (152a, 252a, 352a, 452a, 552a) protruding from a first side (151b, 251b, 351b, 451b, 551b) of the plate (151, 251, 351, 451, 551), a second head (152b, 252b, 352b, 452b, 552b) protruding from a second side (151c, 251c, 351c, 451c, 551c) of the plate (151, 251, 351, 451, 551), and a connecting member (152c, 252c, 352c, 452c, 552c) being connected to the first head (152a, 252a, 352a, 452a, 552a) and the second head (152b, 252b, 352b, 452b, 552b) and passing through the opening (151a, 251a, 351a, 451a, 551a).

2. The battery module (100) of claim 1, wherein the elastic member comprises an elastomer.

3. The battery module (100) according to any one of the preceding claims, wherein a barrier (150a, 150b, 250a, 250b, 350, 450, 550) is formed between each pair of adjacent battery cells (10) of the plurality of battery cells (10).

4. The battery module (100) according to any one of the preceding claims, wherein the plate (151, 251, 351, 451, 551) of the barrier (150a, 150b, 250a, 250b, 350, 450, 550) comprises a plurality of openings (151a, 251a, 351a, 451a, 551a) being formed in a regular pattern.

5. The battery module (100) according to any one of the preceding claims, wherein at least one of the first head (152a, 252a, 352a, 452a, 552a), the second head (152b, 252b, 352b, 452b, 552b) and the connecting member (152c, 252c, 352c, 452c, 552c) is formed of an elastomer.

6. The battery module (100) according to any one of the preceding claims, wherein the connecting member (352c) comprises a spring and/or wherein the material of the first head (252a) is different to the material of the second head (252b).

7. The battery module (100) according to any one of the preceding claims, wherein an end portion of the connecting member (152c, 252c, 352c, 452c, 552c) and a portion of one selected from the first head (152a, 252a, 352a, 452a, 552a) and the second head (152b, 252b, 352b, 452b, 552b) which faces toward the end portion of the connecting member (152c, 252c, 352c, 452c, 552c) comprise a coupling part being provided to couple and fix the end portion of the connecting member (152c, 252c, 352c, 452c, 552c) and said portion selected from the first head (152a, 252a, 352a, 452a, 552a) and the second head (152b, 252b, 352b, 452b, 552b) which faces toward the end portion of the connecting member (152c, 252c, 352c, 452c, 552c).

8. The battery module (100) according to any of the preceding claims, wherein the elastomer of the protrusion (152, 252, 352, 452, 552) has a hardness of 30 Hs to 100 Hs and/or wherein the elastomer of the protrusion (152, 252, 352, 452, 552) comprises at least one material selected from the group consisting of rubber, silicon, and polystyrene.

9. The battery module (100) according to any one of the preceding claims, wherein the at least one barrier (150a, 150b, 250a, 250b, 350, 450, 550) has a size corresponding to the size of the plurality of battery cells (10).

10. The battery module (100) according to any of the preceding claims, wherein a cross-section of the connecting member (152c, 252c, 352c, 452c, 552c) has a shape corresponding to the shape of the opening (151a, 251a, 351a, 451a, 551a) of the plate (151, 251, 351, 451, 551).

11. The battery module (100) according to any one of the preceding claims, wherein the first head (152a, 252a, 352a, 452a, 552a) and/or the second head (152b, 252b, 352b, 452b, 552b) has a round shape or a polygonal tube shape and/or wherein the first head (452a) and/or the second head (452b) comprises a tapering-shape cross section, wherein the sectional axis extends along the longitudinal axis of the connecting member (452c).

12. A vehicle comprising a battery module (100) according to any one of preceding claims.

## Patentansprüche

1. Batteriemodul (100) umfassend:
mehrere Batteriezellen (10),
mindestens eine Barriere (150a, 150b, 250a, 250b, 350, 450, 550), die eine Platte (151, 251, 351, 451, 551) umfasst, die zwischen benachbarten Batteriezellen (10) der mehreren Batteriezellen (10) angeordnet ist;
wobei die mindestens eine Barriere (150a, 150b, 250a, 250b, 350, 450, 550) ferner einen Vorsprung (152, 252, 352, 452, 552) umfasst, der sich von der Platte (151, 251, 351, 451, 551) erstreckt,
wobei mindestens ein Teil des Vorsprungs (152, 252, 352, 452, 552) ein elastisches Element umfasst und wobei der Vorsprung (152, 252, 352, 452, 552) der mindestens einen Barriere (150a, 150b, 250a, 250b, 350, 450, 550) direkt jede der benachbarten Batteriezellen (10) berührt,
**dadurch gekennzeichnet, dass**
die Platte (151, 251, 351, 451, 551) mindestens eine Öffnung (151a, 251a, 351a, 451a, 551a) aufweist,
wobei der Vorsprung (152, 252, 352, 452, 552) der mindestens einen Barriere (150a, 150b, 250a, 250b, 350, 450, 550) einen ersten Kopf (152a, 252a, 352a, 452a, 552a), der von einer ersten Seite (151b, 251b, 351b, 451b, 551b) der Platte (151, 251, 351, 451, 551) vorsteht, einen zweiten Kopf (152b, 252b, 352b, 452b, 552b), der von einer zweiten Seite (151c, 251c, 351c, 451c, 551c) der Platte (151, 251, 351, 451, 551) vorsteht, und ein Verbindungselement (152c, 252c, 352c, 452c, 552c), das mit dem ersten Kopf (152a, 252a, 352a, 452a, 552a) und dem zweiten Kopf (152b, 252b, 352b, 452b, 552b) verbunden ist und durch die Öffnung (151a, 251a, 351a, 451a, 551a) verläuft, umfasst.

2. Batteriemodul (100) nach Anspruch 1, wobei das elastische Element ein Elastomer umfasst.

3. Batteriemodul (100) nach einem der vorherigen Ansprüche, wobei eine Barriere (150a, 150b, 250a, 250b, 350, 450, 550) zwischen jedem Paar an benachbarten Batteriezellen (10) der mehreren Batteriezellen (10) gebildet ist.

4. Batteriemodul (100) nach einem der vorherigen Ansprüche, wobei die Platte (151, 251, 351, 451, 551) der Barriere (150a, 150b, 250a, 250b, 350, 450, 550) mehrere Öffnungen (151a, 251a, 351a, 451a, 551a) umfasst, die in einem regelmäßigen Muster gebildet sind.

5. Batteriemodul (100) nach einem der vorherigen Ansprüche, wobei mindestens ein Element des ersten Kopfs (152a, 252a, 352a, 452a, 552a), des zweiten Kopfs (152b, 252b, 352b, 452b, 552b) und des Verbindungselements (152c, 252c, 352c, 452c, 552c) aus einem Elastomer gebildet ist.

6. Batteriemodul (100) nach einem der vorherigen Ansprüche, wobei das Verbindungselement (352c) eine Feder umfasst und/oder wobei sich das Material des ersten Kopfs (252a) von dem Material des zweiten Kopfs (252b) unterscheidet.

7. Batteriemodul (100) nach einem der vorherigen Ansprüche, wobei ein Endabschnitt des Verbindungselements (152c, 252c, 352c, 452c, 552c) und ein Abschnitt eines ausgewählten des ersten Kopfs (152a, 252a, 352a, 452a, 552a) und des zweiten Kopfs (152b, 252b, 352b, 452b, 552b), welcher zu dem Endabschnitt des Verbindungselements (152c, 252c, 352c, 452c, 552c) gerichtet ist, einen Koppelteil umfassen, der vorgesehen ist, um den Endabschnitt des Verbindungselements (152c, 252c, 352c, 452c, 552c) und den ausgewählten Abschnitt des ersten Kopfs (152a, 252a, 352a, 452a, 552a) und des zweiten Kopfs (152b, 252b, 352b, 452b, 552b), welcher zu dem Endabschnitt des Verbindungselements (152c, 252c, 352c, 452c, 552c) gerichtet ist, zu koppeln und zu fixieren.

8. Batteriemodul (100) nach einem der vorherigen Ansprüche, wobei das Elastomer des Vorsprungs (152, 252, 352, 452, 552) eine Härte von 30 Hs bis 100 Hs aufweist und/oder wobei das Elastomer des Vorsprungs (152, 252, 352, 452, 552) mindestens ein Material umfasst, das aus der Gruppe bestehend aus Kautschuk, Silikon und Polystyrol ausgewählt ist.

9. Batteriemodul (100) nach einem der vorherigen Ansprüche, wobei die mindestens eine Barriere (150a, 150b, 250a, 250b, 350, 450, 550) eine Größe hat, die der Größe der mehreren Batteriezellen (10) entspricht.

10. Batteriemodul (100) nach einem der vorherigen Ansprüche, wobei ein Querschnitt des Verbindungselements (152c, 252c, 352c, 452c, 552c) eine Form aufweist, die der Form der Öffnung (151a, 251a, 351a, 451a, 551a) der Platte (151, 251, 351, 451, 551) entspricht.

11. Batteriemodul (100) nach einem der vorherigen Ansprüche, wobei der erste Kopf (152a, 252a, 352a, 452a, 552a) und/oder der zweite Kopf (152b, 252b, 352b, 452b, 552b) eine runde Form oder eine polygonale Rohrform aufweisen und/oder wobei der erste Kopf (452a) und/oder der zweite Kopf (452b) einen sich verjüngenden Querschnitt aufweisen, wobei sich die Schnittachse entlang der Längsachse des Verbindungselements (452c) erstreckt.

12. Fahrzeug umfassend ein Batteriemodul (100) nach einem der vorherigen Ansprüche.

## Revendications

1. Module de batterie (100) comprenant :
une pluralité d'éléments de batterie (10),
au moins une barrière (150a, 150b, 250a, 250b, 350, 450, 550) comprenant une plaque (151, 251, 351, 451, 551) agencée entre des éléments de batterie (10) adjacents de la pluralité d'éléments de batterie (10) ;
dans lequel l'au moins une barrière (150a, 150b, 250a, 250b, 350, 450, 550) comprend en outre une saillie (152, 252, 352, 452, 552) s'étendant à partir de la plaque (151, 251, 351, 451, 551),
dans lequel au moins une partie de la saillie (152, 252, 352, 452, 552) comprend un élément élastique et dans lequel la saillie (152, 252, 352, 452, 552) de l'au moins une barrière (150a, 150b, 250a, 250b, 350, 450, 550) est en contact direct avec chacun des éléments de batterie (10) adjacents,
**caractérisé en ce que** :
la plaque (151, 251, 351, 451, 551) comprend au moins une ouverture (151a, 251a, 351a, 451a, 551a),
dans lequel la saillie (152, 252, 352, 452, 552) de l'au moins une barrière (150a, 150b, 250a, 250b, 350, 450, 550) comprend une première tête (152a, 252a, 352a, 452a, 552a) faisant saillie d'un premier côté (151b, 251b, 351b, 451b, 551b) de la plaque (151, 251, 351, 451, 551), une seconde tête (152b, 252b, 352b, 452b, 552b) faisant saillie d'un second côté (151c, 251c, 351c, 451c, 551c) de la plaque (151, 251, 351, 451, 551), et un élément de raccordement (152c, 252c, 352c, 452c, 552c) qui est raccordé à la première tête (152a, 252a, 352a, 452a, 552a) et à la seconde tête (152b, 252b, 352b, 452b, 552b) et passant à travers l'ouverture (151a, 251a, 351a, 451a, 551a).

2. Module de batterie (100) selon la revendication 1, dans lequel l'élément élastique comprend un élastomère.

3. Module de batterie (100) selon l'une quelconque des revendications précédentes, dans lequel une barrière (150a, 150b, 250a, 250b, 350, 450, 550) est formée entre chaque paire d'éléments de batterie (10) adjacents de la pluralité d'éléments de batterie (10).

4. Module de batterie (100) selon l'une quelconque des revendications précédentes, dans lequel la plaque (151, 251, 351, 451, 551) de la barrière (150a, 150b, 250a, 250b, 350, 450, 550) comprend une pluralité d'ouvertures (151a, 251a, 351a, 451a, 551a) qui sont formées selon un motif régulier.

5. Module de batterie (100) selon l'une quelconque des revendications précédentes, dans lequel au moins l'une parmi la première tête (152a, 252a, 352a, 452a, 552a), la seconde tête (152b, 252b, 352b, 452b, 552b) et l'élément de raccordement (152c, 252c, 352c, 452c, 552c) est formé à partir d'un élastomère.

6. Module de batterie (100) selon l'une quelconque des revendications précédentes, dans lequel l'élément de raccordement (352c) comprend un ressort et/ou dans lequel le matériau de la première tête (252a) est différent du matériau de la seconde tête (252b).

7. Module de batterie (100) selon l'une quelconque des revendications précédentes, dans lequel une partie d'extrémité de l'élément de raccordement (152c, 252c, 352c, 452c, 552c) et une partie d'une tête sélectionnée parmi la première tête (152a, 252a, 352a, 452a, 552a) et la seconde tête (152b, 252b, 352b, 452b, 552b) qui est orientée vers la partie d'extrémité de l'élément de raccordement (152c, 252c, 352c, 452c, 552c) comprennent une partie de couplage qui est prévue pour coupler et fixer la partie d'extrémité de l'élément de raccordement (152c, 252c, 352c, 452c, 552c) et ladite partie sélectionnée parmi la première tête (152a, 252a, 352a, 452a, 552a) et la seconde tête (152b, 252b, 352b, 452b, 552b) qui est orientée vers la partie d'extrémité de l'élément de raccordement (152c, 252c, 352c, 452c, 552c).

8. Module de batterie (100) selon l'une quelconque des revendications précédentes, dans lequel l'élastomère de la saillie (152, 252, 352, 452, 552) a une dureté de 30 Hs à 100 Hs et/ou dans lequel l'élastomère de la saillie (152, 252, 352, 452, 552) comprend au moins un matériau sélectionné dans le groupe comprenant le caoutchouc, le silicium et le polystyrène.

9. Module de batterie (100) selon l'une quelconque des revendications précédentes, dans lequel l'au moins une barrière (150a, 150b, 250a, 250b, 350, 450, 550) a une taille correspondant à la taille de la pluralité d'éléments de batterie (10).

10. Module de batterie (100) selon l'une quelconque des revendications précédentes, dans lequel une section transversale de l'élément de raccordement (152c, 252c, 352c, 452c, 552c) a une forme correspondant à la forme de l'ouverture (151a, 251a, 351a, 451a, 551a) de la plaque (151, 251, 351, 451, 551).

11. Module de batterie (100) selon l'une quelconque des revendications précédentes, dans lequel la première tête (152a, 252a, 352a, 452a, 552a) et/ou la seconde tête (152b, 252b, 352b, 452b, 552b) a une forme ronde ou une forme de tube polygonale et/ou dans lequel la première tête (452a) et/ou la seconde tête (452b) comprend une section transversale de forme progressivement rétrécie, l'axe transversal s'étendant le long de l'axe longitudinal de l'élément de raccordement (452c).

12. Véhicule comprenant un module de batterie (100) selon l'une quelconque des revendications précédentes.
